# EUROPEAN PATENT SPECIFICATION

(11) **EP 0 486 003 B1**
(45) Date of publication and mention of the grant of the patent: **25.08.1999**
(21) Application number: 91119380.3
(22) Date of filing: 13.11.1991
(51) Int. Cl.: F02D 31/00, F02B 57/06, F02D 41/04, F02D 41/40

(54) **Apparatus and method for controlling an internal combustion engine**
Gerät und Verfahren um eine Innenbrennkraftmaschine zu Steuern
Dispositif et méthode pour commander un moteur à combustion interne

(30) Priority: 13.11.1990 JP 30383590; 13.11.1990 JP 30383690; 13.11.1990 JP 30383790
(43) Date of publication of application: 20.05.1992
(73) Proprietor: YAMAHA HATSUDOKI KABUSHIKI KAISHA, Iwata-shi Shizuoka-ken, 438 (JP)
(72) Inventor: Nonaka, Kimihiro c/o Sanshin Kogyo K. K., Shizuoka-ken (JP)
(74) Representative: Grünecker, Kinkeldey, Stockmair & Schwanhäusser Anwaltssozietät

(56) References cited:
- EP-A- 0 216 111
- WO-A-89/11028
- US-A- 4 344 397
- US-A- 4 509 477
- US-A- 4 754 736
- US-A- 4 850 318
- US-A- 4 955 341
- PATENT ABSTRACTS OF JAPAN vol. 14, no. 527 (M-1050), 20 November 1990 & JP-A-02 221679 (SUZUKI MOTOR CO. LTD.), 4 September 1990,

## Description

The present invention relates to the field of direct fuel injection in internal combustion engines. More specifically the present invention relates to an apparatus and to a method for controlling an internal combustion engine.

The use of fuel injection and particularly direct cylinder fuel injection seems to be a viable way of coping with the control of exhaust gas emissions and the achievement of high fuel efficiency with internal combustion engines. This is particularly true in conjunction with two cycle, crankcase compression internal combustion engine. However, it is essential to provide an adequate and yet relatively simple control for the amount of fuel and timing of the fuel injected by the fuel injector to achieve the desired results.

The amount of fuel injected by the fuel injector and the timing of the injection is controlled in many injection systems in response to two sensed engine parameters, intake air amount and engine speed. Where these two control parameters are employed there are certain difficulties, however, particularly in conjunction with two cycle engines. In the low load low speed range, such as at idling or when trolling with an outboard motor, it is difficult to stabilize the engine speed because the intake air amount fluctuates. Also, if the fuel control is varied in response to sensed engine speed and intake air amount, there is a time delay between the measuring of these parameters and the calculating of the engine fuel control parameters which can cause a delay in speed change response. This is particularly likely to cause a delay in speed increase when the engine is abruptly accelerated.

In order to eliminate some of the difficulties noted, it has been proposed to provide a fuel injection control system that has control phases relating to the load on the engine. For example, the engine can have control phases which differ depending upon whether the engine is operating in a low, medium or high load ranges. With such systems, when the throttle opening is set to a relatively small value, the engine is determined to be in the low load mode and the fuel control is only determined on the basis of engine speed without relation to intake air amount. As a result, the fluctuations resulting from the changes in intake air amount are eliminated. However, when the engine throttle is opened to a larger extent such as to indicate high load, then the fuel control is determined only on the basis of intake air amount regardless of actual engine speed. When the engine is operating in the mid range, the fuel control is determined by a mixture of the engine speed and intake air amount.

It should be understood that it would be possible, to provide a system that measures all parameters of the engine and contains a plurality of maps so as to provide the ideal fuel control under all conditions. However, such an arrangement would employ an extremely expensive and complicated computer and hence is not practical for large volume usage.

A system of control where the engine is operated by a control strategy as aforedescribed depending upon the load range, there are still some problems. These problems occur during transient conditions when the engine is being abruptly accelerated or decelerated. For example, when the engine is operating at a high speed and is abruptly decelerated, if the deceleration brings the speed of the engine into the low load range, then the control parameters are changed at once to values for lowering the engine speed and may cause the engine to be stalled. If the deceleration is into the medium load range and the fuel control parameters are varied relating to intake air amount and engine speed, the reaction time is slow due to the delay of measuring of the intake air amount and the engine speed will not be reduced smoothly from high speed to a lower speed.

Problems also can occur when the engine is operating at low speeds and is abruptly accelerated. If the acceleration is into the medium load range and the engine fuel control is then varied relative to intake air amount and engine speed, the reaction time again is slow due to the delay in the amount of intake air detection and the speed is not raised in a smooth manner.

There are also systems which do not divide the load conditions into three loads, as aforenoted, but only two loads, high load and low load. These systems also have the disadvantages already noted.

Moreover, waves and water level fluctuations cause the load on the propulsion system of a boat to vary. This variation may be significant when the boat is trolling and even while a boat is idling. This in turn causes the engine speed to rise and fall. This variation in engine speed causes irregular combustion, fuel wastage, and may cause the engine to stall. JP-A-1-294936 has disclosed a fuel injection control system which purports to prevent fuel blowby by scavenging the intake air supplied through an intake passage separate from the fuel-air mixture supply system. The system purports to prevent misfire through combustion, under stratified condition around the ignition plug, of fuel-air mixture in the inflammable state.

US-A-4,955,341 shows a system for controlling the idling speed of a direct fuel injected, crank case scavenged, two stroke engine. The system controls the engine speed by either advancing or retarding the fuel injection to the cylinders based on the difference between the actual idling speed and a target idling speed. However, this system controls fuel injection timing only when the throttle is detected in the closed position.

Thus there is felt a need for a fuel injection control system for controlling engine speed at all times during operation of the engine.

As the engine load is varied by waves or water level fluctuations while the boat is running with the throttle opening kept fixed, the engine revolution speed also varies and the passengers may feel unpleasant. To stabilize the engine revolution speed of a crank case scavenged, two stroke engine, prior fuel injection control systems have adjusted the intake air amount by adjusting the throttle opening, and the intake passage cross-sectional area.

However, this requires the installation of actuators for adjusting the throttle opening, and the intake passage cross-sectional area, to stabilize the engine revolution speed by adjusting the intake air amount. The performance of these systems may deteriorate over time due to salt damage to the actuators.

From EP-A-0 216 111 a fuel injection system and control method is known. There, the opening time of a fuel injection valve is controlled by valve opening time determining means on the basis of a pre-stored program and in accordance with various operation parameters such as the intake air flow rate, engine speed and engine temperature. Further the system has means for detecting at least one of the offset of the engine speed from a command speed and the engine speed variation per unit time, the data being used together with the above-mentioned operation parameters in controlling the operation time of the fuel injection value.

However, if the fuel control is varied in response to the engine speed and intake air amount there will be a time delay between the measuring of these parameters and the calculation of the engine fuel control parameters which causes a delay in speed change response.

Further, from US-A-4 344 397 a method for operation of a spark ignited internal combustion engine and arrangement for execution of this method is known, wherein the engine idle speed is stabilized by a successive three stage control system which sequentially regulates ignition timing, fuel quantity and air through put volume. Further, from WO 89/11028 a vehicle speed control system comprising two controllers is known wherein the amount of fuel and/or air supplied to the vehicle engine is determined on the basis of vehicle speed signals and engine speed signals.

US-A-4 509 477 discloses : Idling speed of the internal combustion engine is controlled to a predetermined engine speed by correcting an engine operating parameter, such as, an ignition timing, the quantity of fuel injection, etc., to suppress a variation rate of the engine torque. Instead of detecting the torque variation rate directly, an engine speed variation rate is detected, and a correction value of the engine parameter is determined as a function of the engine speed variation rate.

Accordingly, it is an objective of the present invention to provide an apparatus and method for controlling an internal combustion engine as indicated above, specifically for controlling the engine speed or coping with transient load conditions of the engine such that variations of the engine revolution speed due to load variations caused by waves and water level fluctuations are controlled and irregular combustion in the engine is prevented without sacrificing either fuel efficiency or exhaust gas purification, requiring only a minimum number of sensed conditions for appropriately controlling a system, such as a fuel control system, governing the engine performance and resulting is a relatively simple and uncomplicated structure and operation of said apparatus.

According to the present invention the afore-indicated objective is acquired by means of an apparatus comprising the features of claim 1.

Preferrably the sensor means comprises a throttle position sensor for sensing the opening degree of throttle valve and a means for sensing the engine speed, a means for determining a desired engine speed based on the throttle position to feed the control means for generating a signal corresponding to the difference between the engine speed sensed and the desired engine speed with said signal being supplied to a control unit for adjusting the engine running parameter, preferably the timing or amount of fuel being injected to a cylinder of the engine, the reduce the difference between said sensed and desired engine speeds.

According to another preferred embodiment of the present invention the apparatus comprises a first throttle position sensor for detecting the opening degree of throttle valve, a second speed sensor for sensing the revolution speed of the engine, a means for sensing whether the amount of intake air is in an air excess range, a discrimination means coupled to the air excess range detection means for determining whether the throttle position has been substantially held constant for a predetermined period, a means for determining a desired engine speed based on the throttle position, all said afore-indicated means being connected to the control means for producing a signal corresponding to the difference between the engine speed sensed and the desired engine speed when the throttle position has been held substantially constant for the predetermined period, feeding said signal to a control unit for adjusting at least one engine running parameter to reduce the difference between said sensed and desired engine speeds.

In order to cope with transient load conditions to stabilize engine running performance, the control means of the apparatus is adapted to control the operation of the fuel injector in response to engine running conditions sensed by the sensor means, wherein a means is provided for sensing an abrupt change in the condition of the operator controlled speed means and the control means feeds a signal to adjust the operation of the control unit to control the operation of the fuel injector in response to a sensed abrupt change in the condition of said operator control speed means.

Preferably, in addition to said injection timing the amount of fuel being injected to a cylinder of the engine is controlled.

In view of the method aspects of the present invention the above objective is performed by a method as indicated in claim 20.

Further preferred embodiments of the present invention both in view of apparatus features and method steps are laid down in the further related subclaims, respectively.

In the following the present invention is explained in greater detail by means of several preferred embodiments thereof in conjunction with the accompanying drawings wherein:
Figure 1 is a cross-sectional view taken through a power head of an outboard motor having an internal combustion engine with an apparatus according to a first embodiment of the present invention operating the fuel injection system, showing a portion of the control means thereof schematically,
Figure 2 is a top plane view of the outboard motor of Figure 1 with a portion of the protective cowling removed,
Figure 3 is an enlarged cross-sectional view taken through one cylinder of the internal combustion engine showing a fuel injector and its relationship to the combustion chamber of the engine,
Figure 4 is a graphical view showing the fuel and injection valve timing of the embodiments of the present invention,
Figure 5 is a graphical view of pressure in relation to crank angle indicating how the injection timing can vary the amount of fuel injected according to the embodiments of the present invention,
Figure 6 is a block diagram showing a control routine in accordance with a control method according to the first embodiment of the present invention,
Figure 7 is a block diagram showing another control routine according to a modification of said first embodiment of the present invention,
Figure 8 is a cross-sectional view through the power head of an outboard motor corresponding to Figure 1 including an apparatus for controlling same according to a second embodiment of the present invention, operating the fuel injection system, showing a portion of the control means thereof schematically,
Figure 9 is a graphical view representing the relation between the difference the detected and desired engine speeds and the advancing or retarding of injection timing,
Figure 10 is a block diagram showing a control routine in accordance with the second embodiment of the present invention shown in Figure 8,
Figure 11 is a cross-sectional view taken through the power head of an outboard motor similar to Figures 1 and 8 with a control apparatus according to a third embodiment of the present invention,
Figure 12 is a cross-sectional view similar to Figure 11 according to a fourth embodiment of the present invention,
Figure 13 and Figure 14 is a block diagram showing the control routine in accordance with the third embodiment of the present invention according to Figure 11.

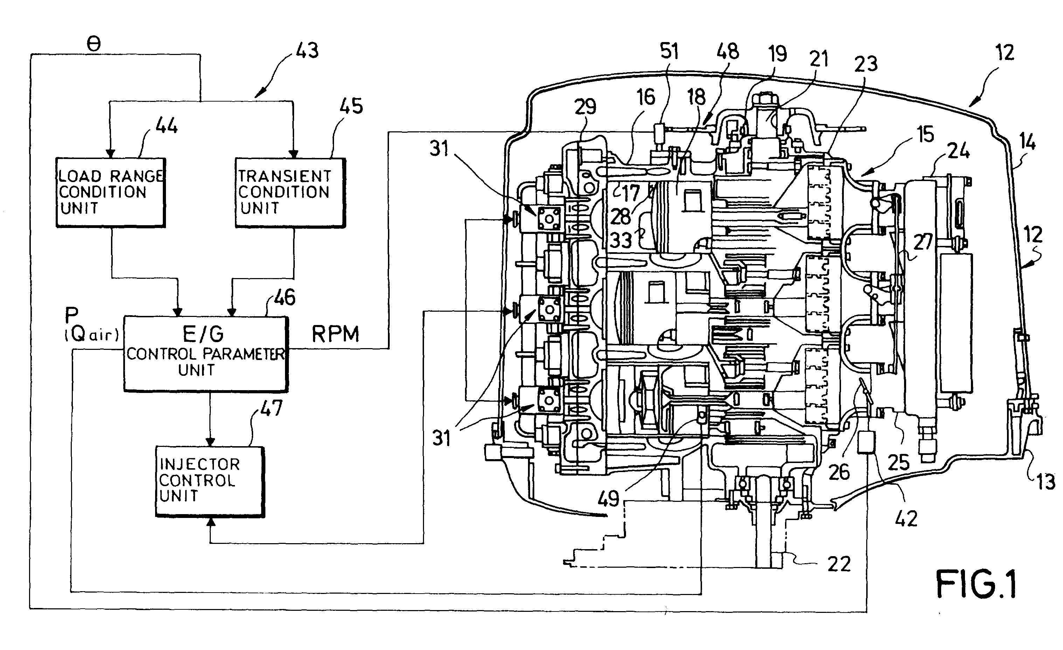

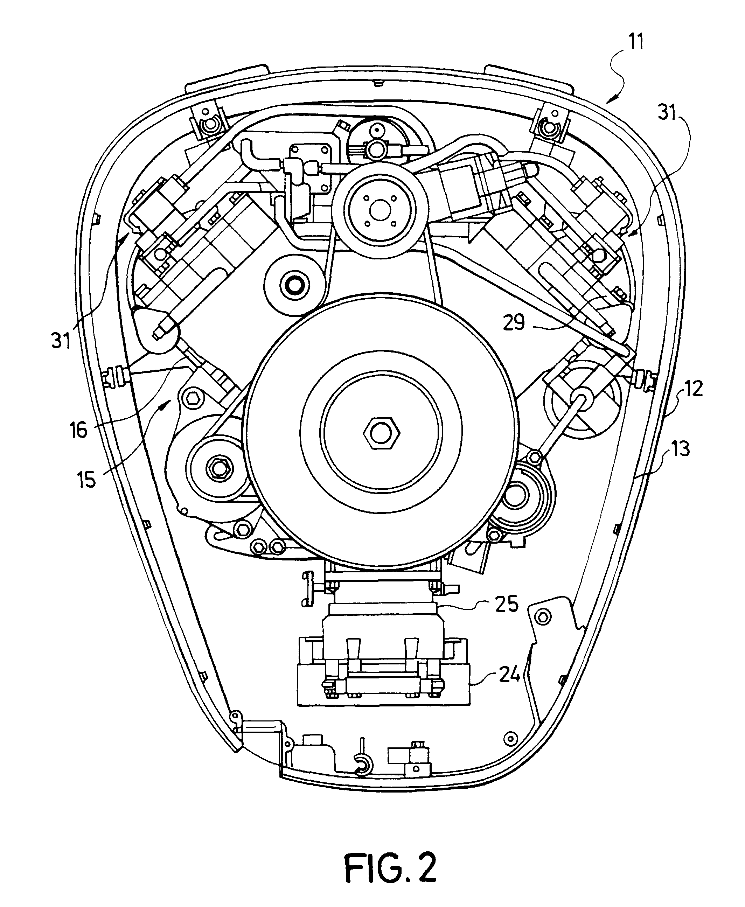

Referring first to Figures 1 and 2, a portion of an outboard motor is shown partially and is identified generally by the reference numeral 11. The invention is described in conjunction with an outboard motor because outboard motors frequently employ two cycle, crankcase compression, internal combustion engines and the invention has particular utility in conjunction with such engines. It will be understood, however, by those skilled in the art that the invention or at least certain facets of it can be employed with engines operating other than on the two stroke principle and also engines other than reciprocating engines.

The outboard motor 11 includes a power head, indicated generally by the reference numeral 12 which is comprised of a lower tray portion 13 and a main cowling portion 14 which is removed in Figure 2 so as to more clearly show the construction.

Contained within the protective cowling 12 is an internal combustion engine, indicated generally by the reference numeral 15, and which as aforenoted operates on a two stroke crankcase compression principle. The engine 15 is, in the illustrated embodiment, of the V-6 type although it will be readily apparent to those skilled in the art how the invention can be employed with engines having different numbers of cylinders.

The engine 15 includes a cylinder block 16 having angularly disposed cylinder banks each of which is formed with three cylinder bores 17. Each cylinder bore slideably supports a piston 18 which is connected to a connecting rod 19 which, in turn, drives a crankshaft 21. As is conventional in outboard motor practice, the crankshaft 21 rotates about a vertically extending axis and drives a drive shaft 22 which extends through the lower unit of the outboard motor (not shown) to drive a propulsion device in a well known manner.

The crankshaft 21 is rotatably journalled within a crankcase formed by the lower end of the cylinder block 16 and a crankcase member 23 which is affixed to the cylinder block 16 in a known manner. The chambers of the crankcase are divided so that there is a single chamber for each cylinder bore 17, as is well known in two cycle engine practice.

An air charge is delivered to each of the crankcase chambers from an air intake device 24 that is contained within the protective cowling 12. The air intake device 24 delivers air to a manifold 25 in which a plurality of flow controlling throttle valves 26 are positioned for controlling the speed of the engine 15 in a well known manner. The throttle valves 26 are all connected together by means of a linkage system 27 and are operated from a remotely positioned operator control mechanism of a well known type.

The air charge which is delivered to the crankcase chambers by the induction system described is then transferred to the area above the pistons 18 through a plurality of scavenge passages 28. This charge is then further compressed between the heads of the pistons 18 and a cylinder head assembly 29 which is affixed to the cylinder block 16 in a known manner.

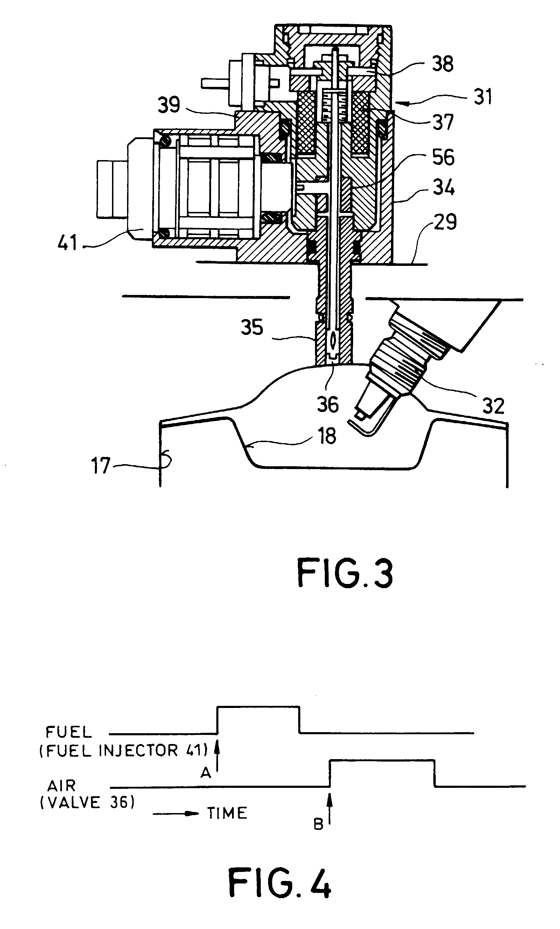

Fuel is injected into the combustion chambers by air/fuel injector units, indicated generally by the reference numeral 31 and which have a construction which will be described later by particular reference to Figure 3. This charge is then fired by spark plugs 32 to drive the pistons 18 downwardly. The burnt charge is then exhausted through exhaust ports 33 into an exhaust manifold (not shown) for discharge to the atmosphere through an underwater exhaust gas discharge, as is typical with outboard motor practice.

Referring now to Figures 3 and 4, as has been noted the injector 31 is an air/fuel injector. Of course, the invention can be employed in conjunction with injectors that inject only fuel as well as injectors that inject fuel and air. The injector 31 includes a housing assembly 34 having a lower portion 35 that is fixed into the cylinder head 29 and which defines a valve seat with which an injector valve 36 cooperates. The injector valve 36 is electrically operated by means of a solenoid 37 positioned within the upper end of the housing 34 and which cooperates with an armature 38 that is affixed to the upper end of the injector valve 36. A coil compression spring 39 acts to urge the armature 38 and injector valve 36 to its closed position.

Fuel is supplied to a chamber of the housing assembly 34 by a high pressure fuel injector 41 that receives fuel under pressure from a high pressure pump (not shown). In addition, compressed air is also delivered to this or another chamber from a high pressure air pump (not shown). The chamber is normally charged with air under pressure at all times and fuel is delivered to the chamber by the fuel injector 41 as shown in Figure 4 upon the initiation of a fuel injection pulse at the point in time A. The amount of fuel injected is varied by changing the duration of the pulse.

The injector valve 36 is opened at a time B by energizing the solenoid 37 and the injector valve 36 is held open for a predetermined time period to permit the fuel and air charge to be admitted to the combustion chamber. The described construction assumes that fuel is delivered to the chamber before the injector valve 36 is opened. It should be obvious that other types of strategies can be employed wherein fuel is injected only at the time when the injector valve 36 is opened.

The actual type of injector employed is not critical to the invention inasmuch as the invention relates to the manner in which the fuel injection is controlled.

While the afore-indicated design of the outboard motor 11 is more or less conventional in the art and is the same for all embodiments of the present invention described hereinafter the apparatus for controlling the internal combustion engine 15 is not and several embodiments thereof are described hereinafter starting with Figure 1 related to a control arrangement which adjusts the operation of the control means, preferably of the air/fuel injectors 31 is response to a sensed abrupt change in the load condition of the engine 15, for example as caused by a sudden acceleration or deceleration of the engine.

Finally, in this case, also the strategy for providing the amount of fuel required for a given running condition may be of any conventional type and preferably is one that is divided into load ranges such as low load-low speed, medium load-medium speed and high load-high speed ranges.

In such a system the low load fuel requirements are provided primarily in response to the sensing of the engine speed of the engine while at the high load-high speed condition, the requirements are met by sensing primarily the throttle position. In the intermediate or mid-range, a combination of these signals are employed to provide the fuel control. Alternatively, the first embodiment of the present invention may be employed in systems that divide the engine control int only low and high speed ranges and sense parameters, as aforenoted.

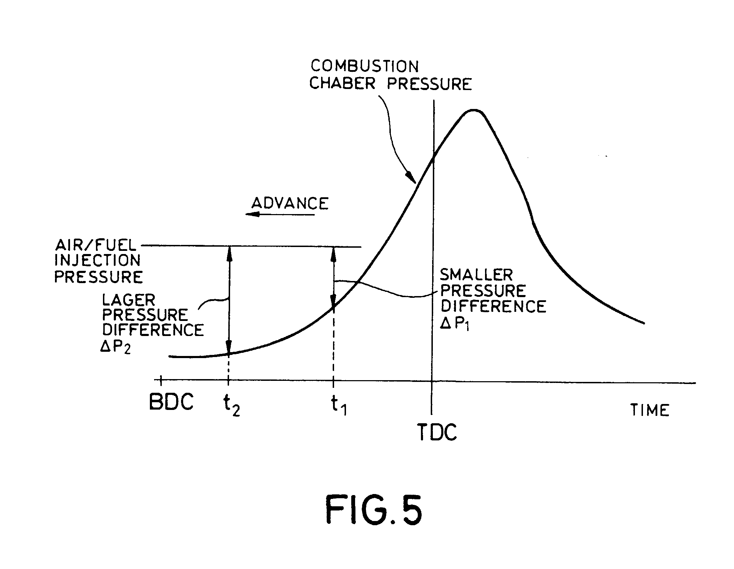

The present first embodiment as exemplified in Figs 1 to 7, however, is concerned with adjusting the amount of fuel supplied in response to sudden acceleration or deceleration under certain conditions, as will be described. The amount of fuel supplied may be adjusted either by adjusting the duration of fuel injection from the injector 41 or the timing of the injection. Figure 5 is a graphical view showing how the timing of injection will be effective to change the amount of fuel which is actually injected.

Figure 5 is a graphical view wherein the curve shows the combustion chamber pressure in relation to crank angle. If it is assumed that the pressure of the air supplied by the fuel/air injector 41 is constant and, therefore, it should be readily seen that if the injector valve 26 is opened at the time t₁ there will be a pressure difference P1 that is relatively small and hence a relatively small amount of fuel and air will be injected for a given duration of injection. If, however, the injection time is advanced to the time t₂ then there will be a greater pressure difference P2 and hence a greater amount of fuel and air will be injected during a given period of injection. In addition to changing the amount of fuel and air injected either by changing duration or timing, a combination of these two methods may be employed.

Referring again primarily to Figure 1, the engine 15 is provided with a control system embodying certain components, shown in block form, and certain sensors for sensing engine operating characteristics. These engine condition sensors include a throttle position sensor 42 that is associated with one of the throttle valves 26 and which outputs a signal to the control circuit, indicated generally by the reference numeral 43 and specifically to a load range condition sensing unit 44 and a transient operation recognizing unit 45. The load range unit 44 determines the load range that the engine 15 is operating. That is, if the control system 43 operates during three distinct load ranges (low, medium and high) or one with only two range (low and high) the unit 44 determines which range the engine is operating in from the degree opening of the throttle valves 26.

The transient condition sensing unit 45, on the other hand, senses actual position of the throttle valves 26 at selected time increments and hence will provide an indication of when the throttle valve 26 is being opened or closed rapidly to indicate rapid acceleration or deceleration.

The units 44 and 45 output their signals to an engine control parameter determining unit 46 which will determine the necessary amount of fuel. The unit 46 also receives a speed and crank angle signal from a pulser coil 51 of a magneto type ignition system 48 and a pressure signal P from a crankcase pressure sensor 49. Under steady state running conditions, the unit 46 outputs a fuel control signal to a driver or injection control unit 47 which controls the air/fuel injectors 31 and also the fuel injector portion 41 thereof so as to provide the desired fuel/air mixture.

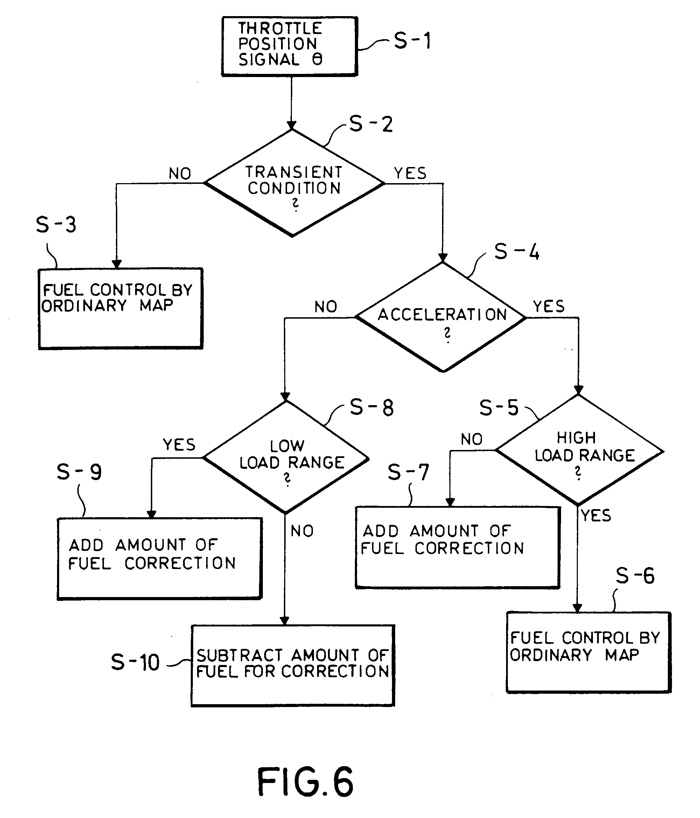

As previously noted, under steady state running conditions, the amount of fuel supplied is determined solely by the engine load as determined either by the position of the throttle valve 26 or the air flow as determined by the sensor 49 or a combination thereof, depending upon the specific strategy. However, when the transient condition sensing unit 45 senses a rapid acceleration or deceleration through rapid opening or closing of the throttle valves 26, as determined by the position sensor 42 and the time in the unit 45, then the amount of fuel supplied is adjusted so as to improve running in accordance with a control strategy, for example as shown in Figure 6.

The routine of Figure 6 is that that is employed when the main control system operates in three different load ranges, low, medium and high. The program starts at the step S1 and reads the throttle position by the throttle position sensor 42 and the transient load condition unit 45 then at the step S2 makes a determination whether the throttle position is being held constant or is changing. If there is not a transient condition, the program moves to the step S3 so as to set the fuel control by the fuel parameter control unit 46 from an ordinary map of the type employed to set the fuel control for steady state conditions.

If, however, as the step S2 it is determined that the engine is in a transient condition, the program moves to the step S4 to determine if there is acceleration or deceleration. If at the step S4 it is determined that the engine is accelerating, the program moves to the step S5 to determine which load range the engine is operating in. If the engine is already in the high load range, no adjustment is required in the amount of fuel supplied in order to obtain smooth running and the program moves to the step S6 so as to have fuel control accomplished by the ordinary map in the engine control parameter unit 46. If, however, the engine is not operating in the high load range, then the program moves to the step S7 so as to increase the amount of fuel injected by either increasing the duration or advancing the timing of the fuel injection or a combination of both. By adding the amount of fuel, it will be insured that smooth and prompt acceleration will occur. If the amount of fuel injected is not increased and/or the timing of the fuel injection is advanced, there will be hesitation in the acceleration.

If at the step S4 it is determined that the engine is not accelerating, then it is obvious that the engine is being decelerated and the program moves to the step S8 to determine if the engine is operating in the low load range. If the engine is in the low load range and it is being decelerated, the supply of the amount of fuel determined by the actual load range may be so low as to cause the engine to stall. To avoid this, the program moves to the step S9 so as to add an amount of fuel correction either by increasing the duration of the time of fuel injection or advancing the initiation of fuel injection or both.

If at the step S8, it is determined that the engine is not operating in the low load range, then the program moves to the step S10 to decrease either the amount of fuel injected or retard the timing of the starting of fuel injection so as to provide a smoother decrease in engine speed.

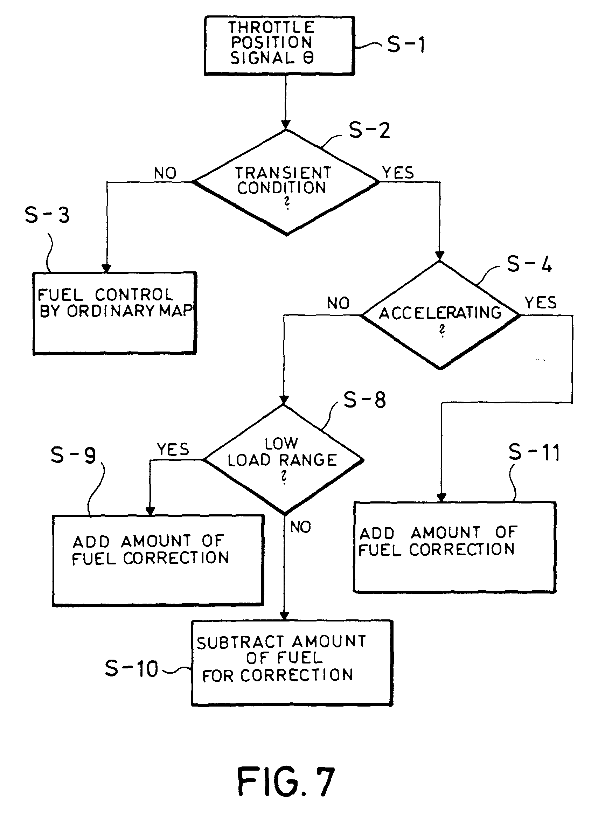

As has been previously noted, the system may also be employed in conjunction with engines that have fuel control systems that only operate over two ranges, low load and high load. Figure 7 shows such a control routine which has certain steps which are the same as those of the control routine for a three range operations and where that is the case those steps have been identified by the same reference numerals.

Like the previous program, this program starts at the step S1 to determine the throttle valve position data and then moves to the step S2 wherein the transient condition sensing unit 45 determines if the engine is operating at a transient condition or not. If not, the program moves to the step S3 so as to set the fuel control by the ordinary map in the engine control parameter unit 46.

If at the step S2 it is determined that the engine is not in a transient condition, then the program moves to the step S4 to determine if the engine is accelerating or not. If the engine is not accelerating then the program moves to the step S8, as with the previously described control routine, to see if the engine is operating in the low load range. If the engine is in the low load range, then the program moves to the step S9 to increase the fuel supply either by increasing the duration or advancing the timing of the beginning of injection so as to prevent stalling, for the reasons noted in connection with the description of the embodiment of Figure 6.

If, however, at the step S8 it is determined that the engine is not operating in the low load range, then the program moves to the step S10 so as to either decrease the amount of fuel injected or retard the timing of initiation of fuel injection or a combination of them to provide a smooth engine speed decrease.

If at the step S4 it has been determined that the engine is accelerating, then the program moves to a step S11 so as to either increase the amount of fuel injected or advance the fuel injection initiation or a combination thereof so as to provide a smooth and rapid acceleration.

It should be readily apparent from the foregoing description that the described embodiments of the invention are extremely effective in providing good fuel control for an engine during transient condition so as to preclude stalling and promote smooth operation.

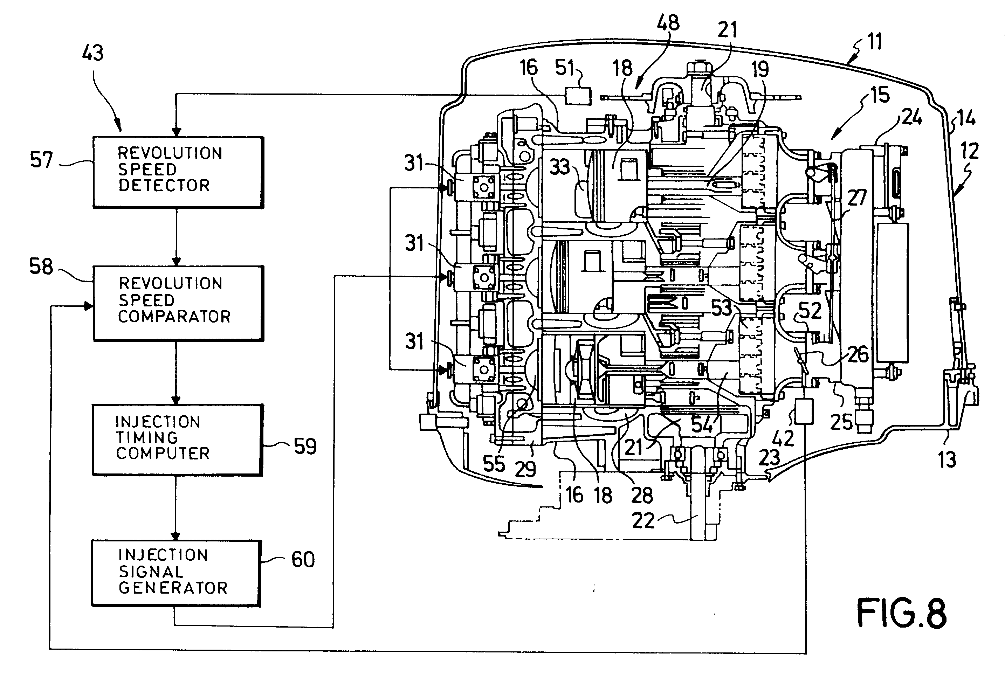

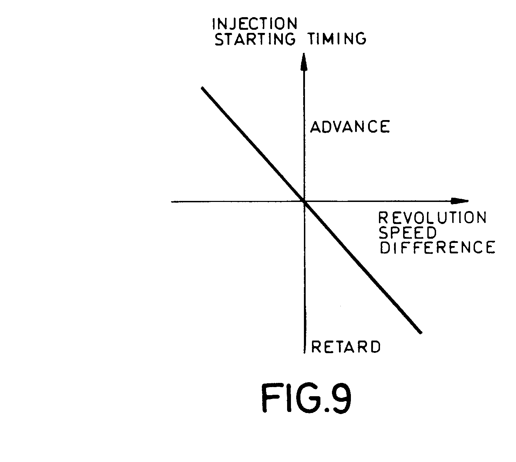

Another, second embodiment of the present invention in the following is explained referring to Figures 8 and 9, respectively. Same portions and features of the outboard motor 11 again are denoted by the same reference numerals as explained in the preceding first embodiment and a detailed explanation thereof is not repeated again. Accordingly, the explanation of said second embodiment of the present invention is focussed on the aspects of the control circuit 43. The above-mentioned Figures 2 to 5 also embody this second embodiment and an explanation of these Figures is also not repeated here again.

As shown in Figure 8 the same outboard motor 11 including a direct fuel injected, scavenaged two-cycle engine 15 is shown as in Figure 1. In the engine 15 air is taken into the combustion chmaber 55 through the air intake device 24 comprising a throttle valve 26 installed in an intake pipe 52 connected with the crankcase 23, a reed valve 53, crank chamber 54 and a scavenging passage 28, while a fuel/air-mixture is directly injected into a portion of the combustion chamber 55 around the spark plug 24 by the air/fuel injector 31 mounted on the cylinder head 29 (Figure 3).

Each air/fuel injector or other injector device 31 meters fuel fed by a fuel pump (not shown) through a pressure regulator with the metering device of the high pressure fuel injector 41 and supplies the metered fuel to the metering chamber 56 at the supply starting timing A shown in Figure 4. The metering chamber 56 is kept supplied with compressed air from an air compressor at a pressure regulated by a pressure regulator and the fuel supplied to the metering chamber 56 is injected as an air/fuel-mixture into the combustion chamber 55 when the injection valve 36 is opened at the injection starting timing B shown in Figure 4.

According to this second embodiment of the present invention the engine 15 comprises a fuel injection control circuit 43 for controlling the high pressure fuel injectors 41 composed of a revolution speed detector 57, a revolution speed comparator 58, an injection timing computer 59 and an injection signal generator 60, the two latter mentioned units correspond to the injector control unit 47 of the first embodiment of Figure 1.

The revolution speed detector 57 detects the current engine revolution speed through a pulser coil 51 installed on the engine 15 around the upper end portion of the crankshaft 21, and the revolution speed comparator 58 compares the current engine revolution speed detected by the revolution speed detector 57 with the desired revolution speed obtained from the throttle opening detected by the throttle opening sensor (detector) 42. The desired revolution speed is stored as a two-dimensional map in the memory integrated in the fuel injection control system 43, and is calculated based on the throttle opening angle.

The injection timing computer 59 adjusts the injection starting timing A of the injection device 31 in response to the comparison result of the revolution speed comparator 58 as shown in Fig. 9; it advances the injection starting timing when the detected engine revolution speed is lower than the desired revolution speed, and it retards the injection starting timing when the detected engine revolution speed is higher than the desired revolution speed. In addition, other engine parameters such as the amount of fuel injected to the cylinder and the timing of the spark, may be adjusted in response to the comparison result of the revolution comparator 58.

The injection signal generator 60 (corresponding to the injector control unit 47 of Figure 1) delivers an injection valve opening signal to the injection device 31 at the injection starting timing A based on the computing result of the injection timing computer 59. The injection valve opening signal is generated when the throttle opening angle is smaller than a constant angle stored in the memory integrated in the fuel injection control system 43.

In operation of the 2-cycle engine 15, a fuel-air mixture including at least Q mm³ of fuel per cycle is injected from the injection device 31 to provide the appropriate fuel-air mixture in the combustion chamber portion around the spark plug 32. In addition, excessive air sufficient for improving fuel consumption and exhaust gas purification is taken into the combustion chamber 55. This allows the injection starting timing to be retarded so that the revolution speed can be lowered even if the Q mm³ of fuel per cycle is perfectly combusted and develops a great amount of energy.

In engine 15, the larger the pressure difference between the fuel-air mixture and the combustion chamber interior the more complete is the atomization of the fuel. That is, the more advanced the injection starting timing as shown in Fig. 5, the better the fuel atomization. This in turn improves fuel combustion.

Therefore, when the engine load increases due to waves or water level fluctuations while idling or trolling and the engine revolution speed is lowered, the control system 43 advances the injection starting timing in response to the drop in engine revolution speed. By this timing advance, fuel atomization and accordingly fuel combustion are improved, energy development is increased, and the engine revolution speed is raised.

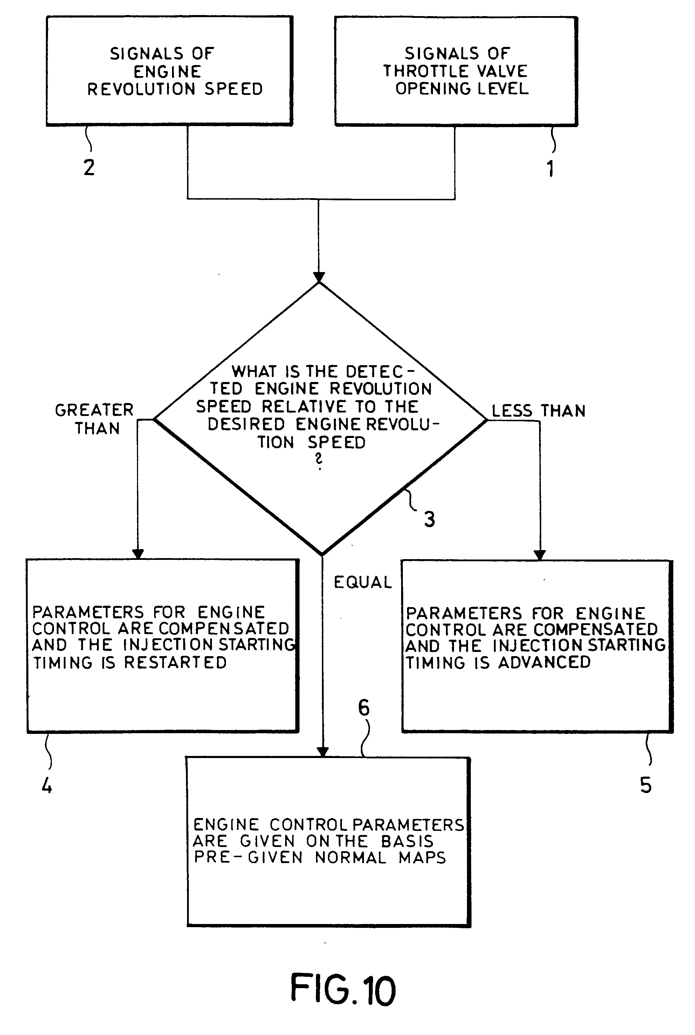

Figure 10 is a flow chart illustrating the operation of this second embodiment of the present invention. In step 1 of Figure 10 the current throttle opening level is detected and in step 2 shows the current engine revolution speed is detected. In step 3 a desired engine revolution speed based on the detected level of throttle opening is compared with the detected current engine revolution speed. When the current engine revolution speed is greater than the desired engine revolution speed the injection start timing is retarded in step 4. When the detected engine revolution speed is equal to the desired engine revolution speed injection start timing is adjusted based on a predetermined normal value in step 6. Finally, when the detected engine revolution speed is less than the desired engine revolution speed, the injection start timing is advanced in step 5. other engine control parameters may also be varied in response to the detected difference between the detected and desired engine revolution speeds, to achieve the desired engine revolution speed.

That is, the engine revolution speed drop caused by the load increase can be prevented without sacrificing fuel consumption and exhaust gas purification.

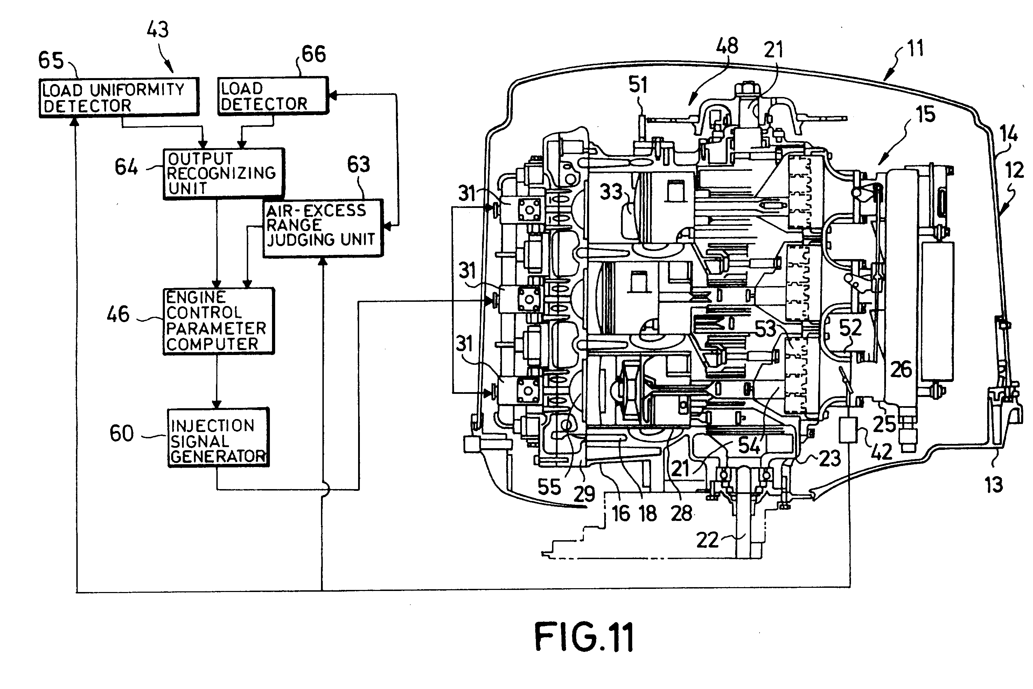

In the following a third and fourth embodiment of the present invention is explained referring to Figures 11 to 13 and 14. Again all explanations provided with respect to the proceeding embodiments according to Figures 1 and 8 apply as far as the structure of the outboard engine 11 itself is concerned and in view of the operation of the control apparatus explained for said further embodiments hereinafter, Figures 2 to 5 also reflect the effects of said fourth and fifth embodiments of the control apparatus for controlling an internal combustion engine, specifically a direct injected, scavenged two-cycle engine.

The following embodiments aim to provide a control system effectively reducing engine speed variations without requiring the installation of additional actuators, thus providing an appropriate engine speed regulating system.

Again, as in the preceding embodiments Figure 11 discloses a two-cycle engine 15 as explained in greater detail above, having a fuel injection control circuit 43 for controlling the injection device (air/fuel-injectors) 31. In this case the control circuit 43 comprises an air excess range judging unit 63, again a engine control parameter unit (computer) 46 and an injection signal generator 60 (corresponding to the injector control unit 47 in Figure 1).

The air-excess range judging unit 63 judges whether or not the amount of air taken in the combustion chamber 55 is in the air-excess range on the basis of the engine revolution speed as represented by the detection signal of a pulser coil 51 installed on the engine 15 around the upper end portion of the crankshaft 21 and the air intake amount based on the opening of throttle valve 26 as represented by the detection signal of the throttle position sensor 42, or as represented by the detection signal of a crank chamber pressure sensor installed in the crank chamber.

An engine output recognizing unit 64 is incidentally provided with a load uniformity detector 65 which judges that the engine 15 is in the fixed throttle opening state on the basis of the detection signal of the throttle position sensor 42. The load uniformity detector 65 generates a signal indicating a fixed throttle state whenever the throttle opening is kept fixed for more than a predetermined time.

A load detector 66 detects the engine revolution speed on the basis of the detection signal of the pulser coil 51 while the engine 15 is in the fixed throttle opening state. When the engine 15 is in the fixed throttle opening state, a desired revolution speed is calculated based on the degree to which the throttle is open as represented by the signal from the throttle opening detector (throttle position sensor) 42.

When the air-excess range judging unit 63 judges that the intake air amount is in the air-excess range, the engine control parameter computer 46 adjusts the fuel injection amount and the injection starting timing so that the desired output recognized by the output recognizing unit may be realized.

More specifically, the memory integrated in the air-excess range judging unit 64 stores a three-dimensional map of data for the air-excess ratios that are optimized in response to the throttle opening angle and the engine speeds detected. Based on this map, the air-excess range judging unit 64 judges, immediately upon receiving the signals for the throttle opening angle and the engine speed from the respective sensor 42, 51, whether the air amount detected is in the excess range. In this particular engine, the air-excess ratios over 1 are applied only for relatively small throttle opening angles at low engine speed operation. The ratios 1 and less are applied for all other conditions.

The injection signal generator 60 delivers an injection valve opening signal with the injection amount and injection starting timing based on the computing results of the engine control parameter computer 46 More specifically, the air intake amount data, which is experimentally determined to correspond to certain throttle openings and engine speeds, is stored in the engine control parameter computer 46. The engine control parameter computer 46 operates on this data, in light the air-excess ratios, to calculate the fuel injection amount. The fuel injection timing, on the other hand, is predetermined in correspondence with the engine speeds. The engine control parameter computer 46 may be such that it adjusts the ignition timing.

In the fuel-air mixture injection type engine 15 according to this invention, the larger the pressure difference between the fuel-air mixture and the combustion chamber interior, the better the fuel atomization and fuel combustion. This, consequently, increases the engine revolution speed. Assuming that the fuel-air mixture pressure is fixed, the lower the combustion chamber pressure, that is, the nearer the injection starting timing is to bottom dead center (the more is advanced the injection starting timing), the larger the pressure difference (see Fig. 5). That is, the output of the engine 15 is increased by advancing the injection starting timing.

In the engine 15 since appropriate fuel-air mixture is fed into the combustion chamber 55 portion around the spark plug 32 while sufficient excessive air is taken into the combustion chamber 55 to improve fuel consumption and exhaust gas purification, especially under the condition of small throttle opening angle and low engine speed, the combustion chamber 55 interior is in an air-excess state and excessive air remains there even after the completion of fuel combustion.

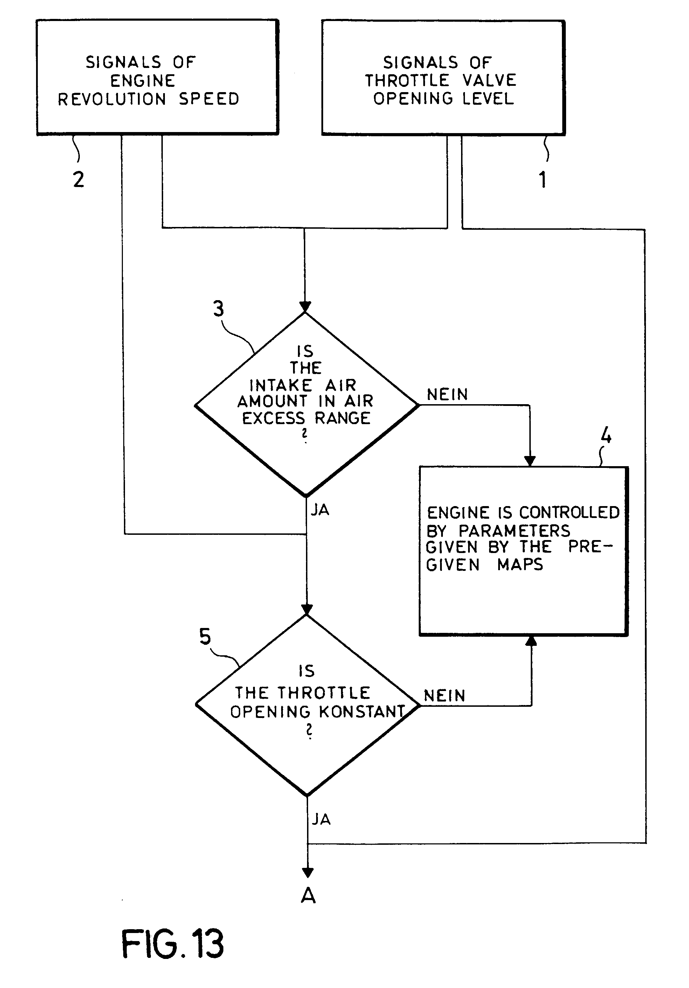

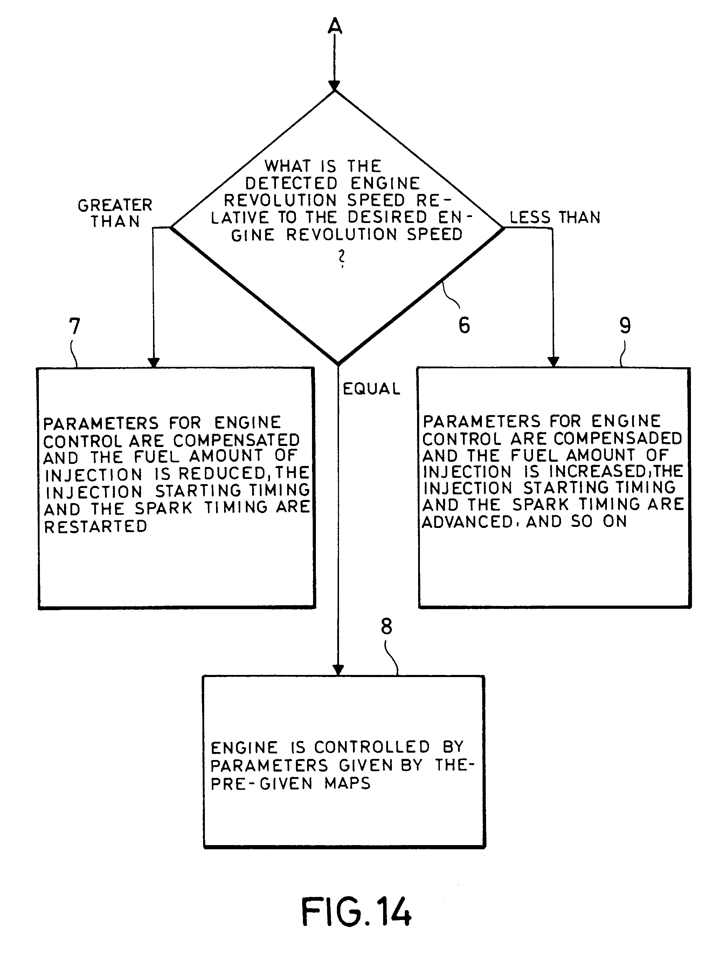

Figs. 13 and 14 are a flow chart illustrating the operation of an engine control system according to this fourth embodiment of the invention. The degree to which the throttle valve 26 is open is detected in step 1, and the engine speed of revolution is detected in step 2. In step 3 these values are used to determine whether the amount of intake air is in the air-excess range. If the intake air is not in the air-excess range the engine is controlled by predetermined parameters in step 4. If the intake air is in the air-excess range, the system determines whether or not the degree to which the throttle is open has been constant for a predetermined amount of time in step 5. If the throttle has not been in a constant position for a predetermined amount of time, the engine 15 is controlled by the predetermined parameters in step 4. If the degree to which the throttle is open has been constant for a predetermined tine, the system compares the engine speed of revolution with a desired engine speed of revolution based on the degree to which the throttle is open in step 6. When the detected engine speed is greater than the desired engine speed various engine running parameters are modified and the amount of fuel injection is reduced and the injection starting timing and spark timing are retarded in step 7. If the detected engine speed is equal to the desired engine speed, the engine 15 is controlled based on predetermined parameters in step 8. Finally, when the detected engine speed is less than the desired engine speed the amount of fuel injected is increased and the injection starting timing and the spark timing are advanced in step 9.

Therefore, the control means 43 adjusts the engine output by adjusting the fuel injection amount and injection starting timing without adjusting the intake air amount by adjusting the throttle opening or the like, and realizes the fixed throttle opening running at a desired engine output while preventing fluctuation of the engine revolution speed. The output of engine 15 may be increased by increasing the fuel injection amount increment, or through higher injection speed achieved by the increased pressure difference corresponding to the advanced injection starting timing, or through the more complete combustion associated with the advanced injection starting timing.

That is, the control means 43 stabilizes the engine revolution speed without using actuators for the throttle opening adjustment or the like to realize the desired fixed throttle opening running, as ( especially under conditions of small throttle opening angle and low engine speed) the stable running of the engine is not affected by external disturbances such as waves and water level fluctuations.

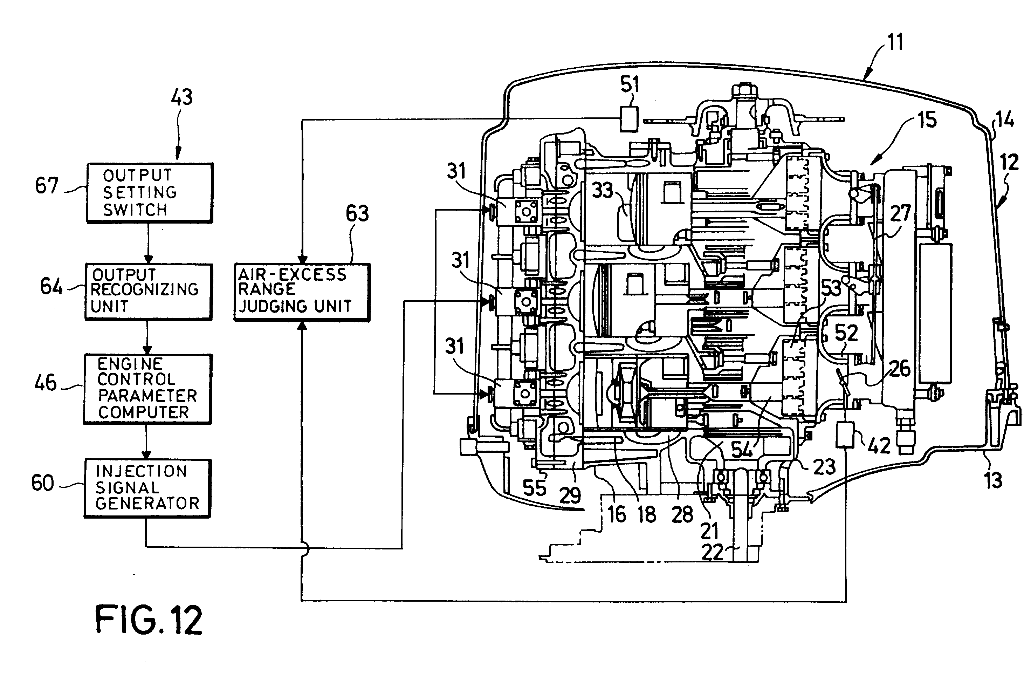

Another fourth embodiment of the invention as shown in Figure 12 has a control circuit 43 as described hereafter for controlling the injection devices 31 in the engine 15 which is the same as the engine 15 in Figure 11.

The control circuit 43 is different from that of Figure 11 in that the output recognizing unit 64 is provided with an output setting switch 67 in place of the load uniformity detector 65 and the load detector 66 as shown in Fig. 15. The output setting switch 67 recognizes the driver's desired output in response to the driver's manual operation of the output setting switch 67 and actuates the engine control parameter computer 46 according to this desired output.

The engine output of the engine according to the second embodiment is adjusted toward the driver's desired output and the engine revolution speed is stabilized by changing the engine control parameters in the air-excess range without using actuators for adjusting the intake air amount.

## Claims

1. Apparatus for controlling an internal combustion engine comprising a fuel injector (31) for directly injecting fuel into a combustion chamber, operator controlled speed means for controlling the speed of said engine, sensor means (42,51) for sensing certain engine running conditions and a control means (43) for controlling the operation of the engine in response to the condition sensed by said sensor means, wherein the engine speed as an engine load responsive parameter of the engine (15) is discriminated for determining the rate of change of said parameter, to derive a control signal for controlling an injection start timing and a spark timing in a manner approaching the detected engine load responsive parameter to a target value thereof.

2. Apparatus as claimed in claim 1, **characterized in that** the sensor means comprises a throttle position sensor (42) for sensing the opening degree of a throttle valve (26) and a means (51) for sensing the engine speed, in that a means for determining a desired engine speed based on the throttle position is provided, and in that the control means (43) provides for generating a signal corresponding to the difference between the engine speed sensed and the desired engine speed, said signal being supplied to a control unit (47; 59, 60) for adjusting the engine running parameter to reduce the difference between said sensed and target engine speeds.

3. Apparatus as claimed in claims 1 or 2, **characterized in that** the sensor means comprises a first throttle position sensor (42) for detecting the opening degree of a throttle valve, a second speed sensor (51) for sensing revolution speed of the engine (15), a means (63) for sensing whether the amount of intake air is in an air excess range, in that a discrimination means (64) coupled to the air excess range detection means is provided for determining whether the throttle position has been substantially constant for a predetermined period, in that a means (46) for determining a desired engine speed based on the throttle position is provided and in that the afore-indicated means are connected to the control means (43) for producing a signal corresponding to the difference between the engine speed sensed and the desired engine speed when the throttle position has been substantially constant for the predetermined period, said signal being supplied to a control unit (60) for adjusting said at least one engine running parameter to reduce the difference between said sensed and target engine speeds.

4. Apparatus as claimed in at least one of the preceding claims 1 to 3, **characterized in that** in addition to said fuel injection timing the amount of fuel being injected to a cylinder of the engine is controlled.

5. Apparatus as claimed in claim 4, **characterized in that** the fuel injection timing is advanced when the engine speed is lower than the desired engine speed, and is delayed when the engine speed is greater than the desired engine speed.

6. Apparatus as claimed in claims 4 or 5, **characterized in that** the amount of fuel injected to the cylinder is increased when the engine speed is lower than the desired engine speed, and is decreased when the engine speed is greater than the desired engine speed.

7. Apparatus as claimed in claim in one of claims 1 to 6, **characterized in that** the spark timing is advanced when the engine speed is lower than the desired engine speed, and is delayed when the engine speed is greater than the desired engine speed.

8. Apparatus as claimed in at least one of the preceding claims 1 to 7, **characterized in that** the means for sensing the engine speed includes a pulser coil (51).

9. Apparatus as claimed in at least one of the preceding claims 1 to 8, **characterized in that** the control means includes an injection timing computer.

10. Apparatus as claimed in one of claims 1 to 9, **characterized in that** a control unit (47 ; 59,60) is adapted to control the operation of the fuel injector (31) in response to said engine running conditions sensed by said sensor means (42), in that a means (45) is provided for sensing an abrupt change in the condition of the operator controlled speed means, and in that the control means (43) provides for a control signal adjusting the operation of said control unit (47) in response to a sensed abrupt change in the condition of said operator controlled speed means.

11. Apparatus as claimed in claim 10, **characterized in that** the control unit (47) for controlling the operation of the fuel injector operates during sensed load ranges of the engine and provides a different control strategy depending upon the range of engine load.

12. Apparatus as claimed in claims 10 or 11, **characterized in that** the control means (43, 46) for adjusting the operation of the control unit (47) in response to a sensed abrupt change in the condition of said operator controlled speed means is operative to activate the control unit (47) only when the engine (15) is operating is certain load ranges.

13. Apparatus as claimed in at least one of the preceding claims 10 to 12, **characterized in that** said control means (43) is non-operative for activating the control unit (47) when the engine is accelerating and is the high load range.

14. Apparatus as claimed in at least one of the preceding claims 10 to 13, **characterized in that** said control means (43) provides either fuel increase or advancing in the timing of fuel injection when the engine is decelerating and the low load range.

15. Apparatus as claimed in at least one of the preceding claims 10 to 14, **characterized in that** said control means (43) decreases the amount of fuel injected or retards the timing of fuel injection when the engine is decelerating and is not in the low load range.

16. Apparatus as claimed in at least one of the preceding claims 10 to 15, **characterized in that** said control means (43) increases the duration or advances the timing of fuel injection when the engine is accelerating.

17. Apparatus as claimed in claim 16, **characterized in that** the duration of fuel injection is increased or the timing is advanced only when the engine is not in the high load range.

18. Apparatus as claimed in at least one of the preceding claims 10 to 17, **characterized in that**, the control means (43) comprises a load range condition sensing unit (44) and a transient operation recognizing unit (45) outputting their signals to an engine control parameter determining unit (46 ; 57,58) which, in turn, feeds a injector control unit (47 ; 59,60).

19. Apparatus as claimed in claim 18, **characterized in that** a throttle position representing signal is supplied to the load range condition sensing unit (44) and the transient condition recognizing unit (45) whereas the pulser coil (51) of the magneto type ignition system (48) supplies engine speed and crank angle responsive signals to the engine control parameter determining unit (46) receiving also a pressure signal (P) from a crankcase pressure sensor (49) to supply a control signal to the injector control unit (47).

20. Method for controlling an internal combustion engine comprising a fuel injector (31) for directly injecting fuel into a combustion chamber of said engine, operator controlled speed means for controlling the speed of the engine, sensor means (42,51) for sensing certain engine running conditions and a control means (43) for controlling the operation of the engine in response to the conditions sensed by said sensor means, comprising the steps of: sensing the engine speed as an engine load responsive parameter of the engine (15), discriminating same for determining the rate of change thereof, to derive a control signal for controlling an injection start timing and spark timing and adjusting same in a manner to approach the detected engine load responsive parameter to a desired target value.

21. Method as claimed in claim 20, **characterized by** the method steps of:
sensing the engine speed, sensing the throttle position, generating a desired engine speed based on the throttle position, comparing the engine speed sensed to said predetermined desired engine speed to determine the difference between the sensed and desired engine speeds, and adjusting an engine running parameter to reduce the difference between said sensed and desired engine speeds.

22. Method as claimed in claims 20 and 21, **characterized by** the method steps of:
sensing the throttle position, sensing the engine speed and determining whether the throttle position has been held substantially unamended for a predetermined period, controlling the engine based on a predetermined set of parameters corresponding to the sensed throttle position in case the sensed throttle position has been changed and has not been substantially held unamended for the predetermined period, generating a desired engine speed corresponding to the sensed throttle position in case the throttle position has been held substantially unamended for the predetermined period, and adjusting at least one engine running parameter to reduce the difference between the sensed and desired engine speeds.

23. Method as claimed in at least one of the preceding claims 20 to 22 **characterized in that** in addition to said fuel injection timing the amount of fuel being injected to a cylinder of the engine is controlled.

24. Method as claimed in at least one of the preceding claims 20 to 23, **characterized in that** the fuel injection timing is advanced when the engine speed lower than the desired engine speed and is delayed when the engine speed is greater than the desired engine speed.

25. Method as claimed in claim 24, **characterized in that** the amount of fuel injected to the cylinder is increased when the engine speed is lower than the desired engine speed and is decreased when the engine speed is greater than the desired engine speed.

26. Method as claimed in one of claims 20 to 25, **characterized in** **that** the spark timing is advanced when the engine speed is lower than the desired engine speed and is delayed when the engine speed is greater than the desired engine speed.

27. Method as claimed in at least one of the preceding claims 20 to 26, **characterized in that,** the engine running parameter is adjusted on the basis of the difference between the sensed and desired engine speeds and on whether the amount of intake air is in the air excess range.

28. Method as claimed in one of claims 20 to 27, **characterized by** sensing an abrupt change in the condition of said operator controlled speed means and adjusting the operation of said fuel injector in response to a sensed abrupt change in the condition of said operator controlled speed means.

29. Method as claimed in claim 28, **characterized in that** the operation of the fuel injector is varied in response to the changes in load ranges of the engine and provides a different control strategy depending upon the range of engine load sensed.

30. Method as claimed in claims 28 or 29, **characterized in that** an adjusting operation of the fuel injector is performed only when the engine (15) is operating is certain load ranges.

31. Method as claimed in at least one of the preceding claims 28 to 30, **characterized in that** an adjusting of the fuel injector is performed when the engine (15) is accelerating and is in the high load range.

32. Method as claimed in at least one of the preceding claims 28 to 31, **characterized in that** adjusting of the fuel injector provides either fuel increase or advancing the timing of fuel injection when the engine (15) is decelerating and in the low load range.

33. Method as claimed in at least one of the preceding claims 28 to 32, **characterized in that** adjusting of the fuel injector decreases the amount of fuel injected or retards the timing of fuel injection when the engine (15) is decelerating and is not in the low load range.

34. Method as claimed in at least one of the preceding claims 28 to 33, **characterized in that** adjusting of the fuel injector increases the duration or advances the timing of fuel injection when the engine is accelerating.

35. Method as claimed in at least one of the preceding claims 28 to 34, **characterized in that** the duration of fuel injection is increased or the timing is advanced only when the engine (15) is not in the high load range.

## Patentansprüche

1. Vorrichtung zum Steuern einer Brennkraftmaschine, enthaltend einen Kraftstoffeinspritzer (31) zum direkten Einspritzen von Kraftstoff in eine Verbrennungskammer, eine benutzergesteuerte Drehzahlstelleinrichtung zum Steuern der Maschinendrehzahl, eine Sensoreinrichtung (42, 51) zum Erfassen bestimmter Maschinen-Laufzustände und eine Steuereinrichtung (43) zum Steuern des Maschinenbetriebs in Abhängigkeit der Zustände, die mit der Sensoreinrichtung erfaßt werden, wobei die Maschinendrehzahl als ein von der Maschinenbelastung abhängiger Parameter der Maschine (15) ausgewertet wird, um die Änderungsrate dieses Parameters zu bestimmen und ein Steuersignal zum Steuern eines Einspritz-Startzeitpunktes und eines Zündzeitpunktes derart abzuleiten, daß der von der Maschinenbelastung abhängige Parameter einem Sollwert desselben angenähert wird.

2. Vorrichtung nach Anspruch 1 dadurch gekennzeichnet, daß die Sensoreinrichtung einen Drosselklappen-Stellungssensor (42) zum Erfassen des Öffnungsgrades einer Drosselklappe (24) enthält und eine Einrichtung (51) zum Erfassen der Maschinendrehzahl, daß eine Einrichtung zum Ermitteln der gewünschten Maschinendrehzahl auf der Basis der Drosselklappenstellung vorgesehen ist und dadurch daß die Steuereinrichtung (43) ein Signal erzeugt, das der Differenz zwischen der erfaßten Maschinendrehzahl und der gewünschten Maschinendrehzahl entspricht, wobei dieses Signal einer Steuereinheit (47; 59; 60) zum Einstellen des Maschinenlauf-Parameters zugeführt wird, um die Differenz zwischen der erfaßten und der Soll-Maschinendrehzahl zu verringern.

3. Vorrichtung nach Anspruch 1 oder 2, dadurch gekennzeichnet, daß die Sensoreinrichtung einen ersten Drosselklappenstellungs-Sensor (42) zum Erfassen des Öffnungsgrades einer Drosselklappe enthält, einen zweiten Drehzahlsensor (51) zum Erfassen der Drehzahl der Maschine (15), eine Einrichtung (63) zum Erfassen ob sich die Ansaugluftmenge in einem Luftüberschußbereich befindet, daß eine Unterscheidungseinrichtung (64), die mit der Luftüberschußbereich-Erfassungseinrichtung gekoppelt ist, vorgesehen ist, um zu ermitteln, ob die Drosselklappenstellung für einen vorbestimmten Zeitabschnitt im wesentlichen konstant war, daß eine Einrichtung (46) zum Ermitteln einer gewünschten Maschinendrehzahl basierend auf der Drosselklappenstellung vorgesehen ist, und daß die zuvor genannten Einrichtungen mit einer Steuereinrichtung (43) verbunden sind, um ein Signal entsprechend der Differenz zwischen der erfaßten Maschinendrehzahl und der gewünschten Maschinendrehzahl zu erzeugen, wenn die Drosselklappenstellung für einen vorbestimmten Zeitabschnitt im wesentlichen konstant war, wobei dieses Signal einer Steuereinheit (60) zum Einstellen wenigstens eines Maschinenlauf-Parameters zugeführt wird, um die Differenz zwischen der erfaßten und der Soll-Maschinendrehzahl zu verringern.

4. Vorrichtung nach wenigstens einem der vorgenannten Ansprüche 1 bis 3, dadurch gekennzeichnet, daß zusätzlich zum Kraftstoffeinspritz-Zeitpunkt die Kraftstoffmenge, die in einen Zylinder der Maschine eingespritzt wird, gesteuert wird.

5. Vorrichtung nach Anspruch 4, dadurch gekennzeichnet, daß der Kraftstoffeinspritz-Zeitpunkt vorgezogen wird, wenn die Maschinendrehzahl geringer ist als die gewünschte Maschinendrehzahl, und verzögert wird, wenn die Maschinendrehzahl größer ist als die gewünschte Maschinendrehzahl.

6. Vorrichtung nach Anspruch 4 oder 5, dadurch gekennzeichnet, daß die Kraftstoffmenge, die in den Zylinder eingespritzt wird, vergrößert wird, wenn die Maschinendrehzahl geringer ist als die gewünschte Maschinendrehzahl, und verringert wird, wenn die Maschinendrehzahl größer als die gewünschte Maschinendrehzahl ist.

7. Vorrichtung nach einem der Ansprüche 1 bis 6, dadurch gekennzeichnet, daß der Zündzeitpunkt vorgezogen wird, wenn die Maschinendrehzahl geringer ist als die gewünschte Maschinendrehzahl, und verzögert wird, wenn die Maschinendrehzahl größer ist als die gewünschte Maschinendrehzahl.

8. Vorrichtung nach wenigstens einem der vorgenannten Ansprüche 1 bis 7, dadurch gekennzeichnet, daß die Einrichtung zum Erfassen der Maschinendrehzahl eine Impulsgeber-Spule (51) enthält.

9. Vorrichtung nach wenigstens einem der vorgenannten Ansprüche 1 bis 8, dadurch gekennzeichnet, daß die Steuereinrichtung einen Einspritzzeitpunkt-Computer enthält.

10. Vorrichtung nach einem der Ansprüche 1 bis 9, dadurch gekennzeichnet, daß eine Steuereinheit (47; 59; 60) dazu eingerichtet ist, den Betrieb des Kraftstoffeinspritzers (31) in Abhängigkeit der Maschinen-Laufzustände zu steuern, die mit der Sensoreinrichtung (42) erfaßt werden, daß eine Einrichtung (45) vorgesehen ist, um eine abrupte Zustandsänderung der benutzergesteuerten Drehzahleinrichtung zu erfassen, und daß die Steuereinrichtung (43) ein Steuersignal erzeugt, das den Betrieb der Steuereinheit (47) in Abhängigkeit einer erfaßten abrupten Zustandsänderung der benutzergesteuerten Drehzahleinrichtung einstellt.

11. Vorrichtung nach Anspruch 10, dadurch gekennzeichnet, daß die Steuereinheit (47) zum Steuern des Betriebs des Kraftstoffeinspritzers während erfaßten Belastungsausmaßen der Maschine arbeitet und eine andere Steuerstrategie in Abhängigkeit des Ausmaßes der Maschinenbelastung erzeugt.

12. Vorrichtung nach Anspruch 10 oder 11, dadurch gekennzeichnet, daß die Steuereinrichtung (43, 46) zum Einstellen des Betriebs der Steuereinheit (47) in Abhängigkeit einer erfaßten abrupten Zustandsänderung der benutzergesteuerten Drehzahleinrichtung die Steuereinheit (47) nur dann aktiviert, wenn die Maschine (15) unter bestimmten Belastungsbereichen arbeitet.

13. Vorrichtung nach wenigstens einem der vorgenannten Ansprüche 10 bis 12, dadurch gekennzeichnet, daß die Steuereinrichtung (43) die Steuereinheit (47) nicht aktiviert, wenn die Maschine beschleunigt und unter hoher Belastung steht.

14. Vorrichtung nach wenigstens einem der vorgenannten Ansprüche 10 bis 13, dadurch gekennzeichnet, daß die Steuereinrichtung (43) entweder eine Kraftstofferhöhung oder ein Vorziehen der Kraftstoffeinspritzung verursacht, wenn die Maschine abbremst und im Schwachlastbereich arbeitet.

15. Vorrichtung nach wenigstens einem der vorgenannten Ansprüche 10 bis 14, dadurch gekennzeichnet, daß die Steuereinrichtung (43) die Menge des einzuspritzenden Kraftstoffes verringert oder den Zeitpunkt der Kraftstoffeinspritzung verzögert, wenn die Maschine abbremst und nicht im Schwachlastbereich arbeitet.

16. Vorrichtung nach wenigstens einem der vorgenannten Ansprüche 10 bis 15, dadurch gekennzeichnet, daß die Steuereinrichtung (43) die Dauer des KraftstoffEinspritzzeitpunktes verlängert oder diesen vorzieht, wenn die Maschine beschleunigt.

17. Vorrichtung nach Anspruch 16, dadurch gekennzeichnet, daß die Dauer der Kraftstoffeinspritzung verlängert oder der Zeitpunkt vorgezogen wird, wenn die Maschine nicht im Schwachlastbereich arbeitet.

18. Vorrichtung nach wenigstens einem der vorgenannten Ansprüche 10 bis 17, dadurch gekennzeichnet, daß die Steuereinrichtung (43) eine Belstungsgrößen-Zustandserfassungseinheit (44) und eine Übergangsbetriebs-Erkennungseinheit (45) enthält, die ihre Signale an eine Maschinensteuerungsparameter-Ermittlungseinheit (46; 57; 58) ausgeben, die ihrerseits eine Einspritz-Steuereinheit (47; 59; 60) versorgt.

19. Vorrichtung nach Anspruch 18, dadurch gekennzeichnet, daß ein Drosselklappenstellungs-Kennzeichnungssignal der Belstungsgrößen-Zustandserfassungseinheit (44) und der Übergangsbetriebs-Erkennungseinheit (45) zugeführt wird, wohingegen die Impulsgeber-Spule (51) des Magnettyp-Zündungssystems (48) maschinendrehzahl- und kurbelwinkelabhängige Signale der Maschinensteuerungsparameter-Ermittlungseinheit (46) zuführt, die zudem ein Drucksignal (P) von einem Kurbelgehäuse-Drucksensor (49) empfängt, um ein Steuersignal der Einspritz-Steuereinheit (47) zuzuführen.

20. Verfahren zum Steuern einer Brennkraftmaschine, enthaltend einen Kraftstoffeinspritzer (31) zum direkten Einspritzen von Kraftstoff in eine Verbrennungskammer der Maschine, eine benutzergesteuerte Drehzahlstelleinrichtung zum Steuern der Maschinendrehzahl, eine Sensoreinrichtung (42, 51) zum Erfassen bestimmter Maschinen-Laufzustände und eine Steuereinrichtung (43) zum Steuern des Maschinenbetriebs in Abhängigkeit der Zustände, die mit der Sensoreinrichtung erfaßt werden, enthaltend folgende Schritte: Erfassen der Maschinendrehzahl als einen von der Maschinenbelastung abhängigen Parameter der Maschine (15), Auswerten desselben, um die Änderungsrate dieses Parameters zu bestimmen, um ein Steuersignal zum Steuern eines Einspritz-Startzeitpunktes und eines Zündzeitpunktes abzuleiten und derart einzustellen, daß der von der Maschinenbelastung abhängige Parameter einem Sollwert desselben angenähert wird.

21. Verfahren nach Anspruch 20, gekennzeichnet durch folgende Verfahrensschritte:
Erfassen der Maschinendrehzahl, Erfassen der Drosselklappenstellung, Erzeugen einer gewünschten Maschinendrehzahl auf der Basis der Drosselklappenstellung,
Vergleichen der erfaßten Maschinendrehzahl mit der vorbestimmten gewünschten Maschinendrehzahl, um eine Differenz zwischen der erfaßten und der gewünschten Maschinendrehzahl zu ermitteln, und Einstellen eines Maschinenlauf-Parameters, um die Differenz zwischen der erfaßten und der gewünschten Maschinendrehzahl zu verringern.

22. Verfahren nach Anspruch 20 und 21, gekennzeichnet durch folgende Verfahrensschritte:
Erfassen der Drosselklappenstellung, Erfassen der Maschinendrehzahl und Ermitteln, ob die Drosselklappenstellung für eine vorbestimmte Zeitdauer im wesentlichen unverändert gehalten wurde, Steuern der Maschine basierend auf einer vorbestimmte Reihe von Parametern, die der erfaßten Drosselklappenstellung entsprechen für den Fall, daß die erfaßte Drosselklappenstellung verändert wurde und für eine vorbestimmte Zeitdauer nicht im wesentlichen unverändert gehalten wurde, Erzeugen einer gewünschten Maschinendrehzahl entsprechend der erfaßten Drosselklappenstellung für den Fall, daß die Drosselklappenstellung für die vorbestimmte Zeitdauer im wesentlichen unverändert gehalten wurde, und Einstellen wenigstens eines Maschinenlauf-Parameters, um die Differenz zwischen der erfaßten und der gewünschten Maschinendrehzahl zu verringern.

23. Verfahren nach wenigstens einem der vorgenannten Ansprüche 20 bis 22, dadurch gekennzeichnet, daß zusätzlich zum Kraftstoffeinspritz-Zeitpunkt die Kraftstoffmenge, die in einen Zylinder der Maschine eingespritzt wird, gesteuert wird.

24. Verfahren nach wenigstens einem der vorgenannten Ansprüche 20 bis 23, dadurch gekennzeichnet, daß der Kraftstoffeinspritz-Zeitpunkt vorgezogen wird, wenn die Maschinendrehzahl geringer ist als die gewünschte Maschinendrehzahl, und verzögert wird, wenn die Maschinendrehzahl größer ist als die gewünschte Maschinendrehzahl.

25. Verfahren nach Anspruch 24, dadurch gekennzeichnet, daß die Kraftstoffmenge, die in den Zylinder eingespritzt wird, vergrößert wird, wenn die Maschinendrehzahl geringer ist als die gewünschte Maschinendrehzahl, und verringert wird, wenn die Maschinendrehzahl größer als die gewünschte Maschinendrehzahl ist.

26. Verfahren nach einem der Ansprüche 20 bis 25, dadurch gekennzeichnet, daß der Zündzeitpunkt vorgezogen wird, wenn die Maschinendrehzahl geringer ist als die gewünschte Maschinendrehzahl, und verzögert wird, wenn die Maschinendrehzahl größer ist als die gewünschte Maschinendrehzahl.

27. Verfahren nach wenigstens einem der vorgenannten Ansprüche 20 bis 26, dadurch gekennzeichnet, daß der Maschinenlauf-Parameter auf der Basis der Differenz zwischen der erfaßten und der gewünschten Maschinendrehzahl und basierend darauf eingestellt wird, ob sich die Menge der Ansaugluft im Luftüberschußbereich befindet.

28. Verfahren nach einem der Ansprüche 20 bis 27, gekennzeichnet durch Erfassen einer abrupten Zustandsänderung der benutzergesteuerten Drehzahlstelleinrichtung und Einstellen des Betriebs des Kraftstoffeinspritzers in Abhängigkeit der erfaßten abrupten Zustandsänderung der benutzergesteuerten Drehzahleinrichtung.

29. Verfahren nach Anspruch 28, dadurch gekennzeichnet, daß der Betrieb des Kraftstoffeinspritzers in Abhängigkeit der Belastungsänderungen der Maschine variiert wird und somit eine andere Steuerungsstrategie in Abhängigkeit der erfaßten Maschinenbelastung ausgeführt wird.

30. Verfahren nach Anspruch 28 oder 29, dadurch gekennzeichnet, daß ein Einstellbetrieb des Kraftstoffeinspritzers nur durchgeführt wird, wenn die Maschine (15) unter bestimmten Belastungsgrößen arbeitet.

31. Verfahren nach wenigstens einem der vorgenannten Ansprüche 28 bis 30, dadurch gekennzeichnet, daß eine Einstellung des Kraftstoffeinspritzers durchgeführt wird, wenn die Maschine (15) beschleunigt und unter hoher Belastung steht.

32. Verfahren nach wenigstens einem der vorgenannten Ansprüche 28 bis 31, dadurch gekennzeichnet, daß eine Einstellung des Kraftstoffeinspritzers entweder eine Erhöhung des Kraftstoffes oder ein Vorziehen des Kraftstoff-Einspritzzeitpunktes bewirkt, wenn die Maschine (15) abbremst und im Schwachlastbereich arbeitet.

33. Verfahren nach wenigstens einem der vorgenannten Ansprüche 28 bis 32, dadurch gekennzeichnet, daß eine Einstellung des Kraftstoffeinspritzers die Kraftstoffeinspritzmenge verringert oder den Zeitpunkt der Kraftstoffeinspritzung verzögert, wenn die Maschine (15) abbremst und nicht im Schwachlastbereich arbeitet.

34. Verfahren nach wenigstens einem der vorgenannten Ansprüche 28 bis 33, dadurch gekennzeichnet, daß eine Einstellung des Kraftstoffeinspritzers die Dauer des Kraftstoffeinspritzzeitpunktes verlängert oder diesen vorzieht, wenn die Maschine beschleunigt.

35. Verfahren nach wenigstens einem der vorgenannten Ansprüche 28 bis 34, dadurch gekennzeichnet, daß die Dauer der Kraftstoffeinspritzung verlängert oder der Zeitpunkt vorgezogen wird, nur wenn die Maschine (15) nicht unter hoher Belastung arbeitet.

## Revendications

1. Dispositif de commande d'un moteur à combustion interne comprenant un injecteur de carburant (31) servant à injecter directement du carburant dans une chambre de combustion, des moyens de vitesse commandés par l'opérateur pour commander la vitesse dudit moteur, des moyens formant capteurs (42, 51) pour détecter certaines conditions de fonctionnement du moteur et des moyens de commande (43) pour commander le fonctionnement du moteur en réponse à l'état détecté par lesdits moyens capteurs, dans lequel la vitesse de moteur servant de paramètre sensible à la charge du moteur du moteur (15) est soumise à une discrimination pour déterminer le taux de variation dudit paramètre, pour obtenir un signal de commande servant à commander une synchronisation du débit d'injection et une synchronisation d'allumage, de manière à rapprocher d'une valeur de consigne les paramètres sensibles à la charge de moteur.

2. Dispositif selon la revendication 1, caractérisé en ce que les moyens capteurs comprennent un capteur de position d'étranglement (42), pour mesurer le degré d'ouverture d'une soupape d'étranglement (26), et des moyens (51) pour mesurer la vitesse de moteur, en ce que des moyens sont prévus pour déterminer une vitesse de moteur souhaitée sur la base de la position d'étranglement, et en ce que les moyens de commande (43) permettent de produire un signal correspondant à la différence entre la vitesse de moteur mesurée et la vitesse de moteur souhaitée, ledit signal étant fourni à une unité de commande (47; 59, 60) pour ajuster le paramètre de fonctionnement de moteur en vue de réduire la différence entre les vitesses de moteur mesurée et de consigne.

3. Dispositif selon la revendication 1 ou 2, caractérisé en ce que les moyens capteurs comprennent un premier capteur de position d'étranglement (42) servant à mesurer le degré d'ouverture d'une soupape d'étranglement, un deuxième capteur de vitesse (51) pour mesurer la vitesse de rotation du moteur (15), des moyens (63) pour détecter si la quantité d'air admis se trouve dans une plage d'excès d'air, en ce que des moyens de discrimination (64), couplés au moyen de détection de plage d'excès d'air, sont prévus pour déterminer si la position d'étranglement a été sensiblement constante pendant une période prédéterminée, en ce que des moyens (46) pour déterminer une vitesse de moteur souhaitée d'après la position d'étranglement sont prévus, et en ce que les moyens indiqués ci-dessus sont connectés aux moyens de commande (43) afin de produire un signal correspondant à la différence entre la vitesse de moteur mesurée et la vitesse de moteur souhaitée, lorsque la position d'étranglement a été sensiblement constante pendant la période prédéterminée, ledit signal étant fourni à une unité de commande (60) pour ajuster ledit au moins un paramètre de fonctionnement de moteur, afin de réduire la différence entre lesdites vitesses de moteur mesurée et de consigne.

4. Dispositif selon au moins l'une des revendications 1 à 3 précédentes, caractérisé en ce que la commande concerne, en plus de ladite synchronisation d'injection de carburant, la quantité de carburant injectée à un cylindre du moteur.

5. Dispositif selon la revendication 4, caractérisé en ce que le moment de l'injection de carburant est avancé lorsque la vitesse du moteur est inférieure à la vitesse de moteur souhaitée et est retardé lorsque la vitesse du moteur est supérieure à la vitesse de moteur souhaitée.

6. Dispositif selon la revendication 4 ou 5, caractérisé en ce que la quantité de carburant injectée dans le cylindre est augmentée, lorsque la vitesse de moteur est inférieure à la vitesse de moteur souhaitée et est réduite lorsque la vitesse de moteur est supérieure à la vitesse de moteur souhaitée.

7. Dispositif selon l'une des revendications 1 à 6, caractérisé en ce que la synchronisation d'allumage est avancée lorsque la vitesse de moteur est inférieure à la vitesse de moteur souhaitée et est retardée lorsque la vitesse de moteur est supérieure à la vitesse de moteur souhaitée.

8. Dispositif selon au moins l'une des revendications 1 à 7 précédentes, caractérisé en ce que les moyens de mesure de la vitesse de moteur comprennent une bobine d'impulsion (51).

9. Dispositif selon au moins l'une des revendications 1 à 8 précédentes, caractérisé en ce que les moyens de commande comprennent un calculateur de synchronisation d'injection.

10. Dispositif selon l'une des revendications 1 à 9, caractérisé en ce qu'une unité de commande (47; 59, 60) est adaptée de façon à commander le fonctionnement de l'injecteur de carburant (31) en réponse auxdites conditions de fonctionnement de moteur détectées par lesdits moyens capteurs (42), en ce que des moyens (45) sont prévus pour détecter une variation brutale de l'état des moyens de vitesse commandés par l'opérateur, et en ce que les moyens de commande (45) fournissent un signal de commande ajustant le fonctionnement de ladite unité de commande (47) en réponse à une variation brutale détectée de l'état desdits moyens de vitesse commandés par l'opérateur.

11. Dispositif selon la revendication 10, caractérisé en ce que l'unité de commande (47) servant à commander le fonctionnement de l'injecteur de carburant fonctionne durant des plages de charge mesurées du moteur et fournit une stratégie de commande différente d'après la plage de la charge de moteur.

12. Dispositif selon la revendication 10 ou 11, caractérisé en ce que les moyens de commande (43, 46) servant à régler le fonctionnement de l'unité de commande (47), en réponse à une variation brutale détectée de l'état desdits moyens de vitesse commandés par l'opérateur, servent à actionner l'unité de commande (47) seulement lorsque le moteur (15) fonctionne dans certaines plages de charge.

13. Dispositif selon au moins l'une des revendications 10 à 12 précédentes, caractérisé en ce que lesdits moyens de commande (43) ne servent pas à actionner l'unité de commande (47) lorsque le moteur accélère et se trouve dans la plage de charges élevées.

14. Dispositif selon au moins l'une des revendications 10 à 13 précédentes, caractérisé en ce que lesdits moyens de commande (43) fournissent soit une augmentation de carburant soit une avance du moment de l'injection de carburant, lorsque le moteur décélère et se trouve dans la plage de basses charges.

15. Dispositif selon au moins l'une des revendications 10 à 14 précédentes, caractérisé en ce que lesdits moyens de commande (43) diminuent la quantité de carburant injectée ou retardent le moment de l'injection de carburant lorsque le moteur décélère et ne se trouve pas dans la plage de basses charges.

16. Dispositif selon au moins l'une des revendications 10 à 15 précédentes, caractérisé en ce que lesdits moyens de commande (43) augmentent la durée ou avancent le moment de l'injection de carburant lorsque le moteur accélère.

17. Dispositif selon la revendication 16, caractérisé en ce que la durée d'injection de carburant est augmentée ou le moment est avancé seulement lorsque le moteur ne se trouve pas dans la plage de charges élevées.

18. Dispositif selon au moins une des revendications 10 à 17 précédentes, caractérisé en ce que les moyens de commande (43) comprennent une unité de détection d'état de plage de charge (44) et une unité de reconnaissance de fonctionnement temporaire (45) fournissant leurs signaux à une unité de détermination de paramètres de commande de moteur (46; 57, 58) qui à son tour alimente une unité de commande d'injecteur (47; 59, 60).

19. Dispositif selon la revendication 18, caractérisé en ce qu'un signal de représentation de position d'étranglement est fourni à l'unité de détection d'état de plage (44) et à l'unité de reconnaissance d'état temporaire (45), tandis que la bobine d'impulsion (51) du système d'allumage de type magnéto (48) fournit des signaux sensibles à la vitesse du moteur et à l'angle de vilebrequin à l'unité de détermination de paramètre de commande de moteur (46), recevant également un signal de pression (P) d'un capteur de pression de carter de vilebrequin (49) pour fournir un signal de commande à l'unité de commande d'injecteur (47).

20. Procédé de commande d'un moteur à combustion interne, comprenant un injecteur de carburant (31) pour injecter directement du carburant dans une chambre de combustion dudit moteur, des moyens de vitesse commandés par l'opérateur pour commander la vitesse du moteur, des moyens capteurs (42, 51) pour détecter certaines conditions de fonctionnement du moteur, et des moyens de commande (43) pour commander le fonctionnement du moteur en réponse aux conditions détectées par lesdits moyens capteurs, comprenant les étapes consistant à : mesurer la vitesse de moteur à titre de paramètre sensible à la charge motrice du moteur (15), discriminer cette dernière afin de déterminer son taux de variation pour obtenir un signal de commande servant à commander une synchronisation de débit d'injection et une synchronisation d'allumage et les régler de manière à approcher d'une valeur de consigne souhaitée le paramètre sensible à la charge de moteur mesuré.

21. Procédé selon la revendication 20, caractérisé par les étapes de procédé consistant à :
mesurer la vitesse de moteur, détecter la position d'étranglement, produire une vitesse de moteur souhaitée d'après la position d'étranglement, comparer la vitesse de moteur mesurée et ladite vitesse de moteur souhaitée prédéterminée pour déterminer la différence entr les vitesses de moteur mesurée et souhaitée, et régler un paramètre de fonctionnement de moteur pour réduire la différence entre lesdites vitesses de moteur mesurée et souhaitée.

22. Procédé selon les revendications 20 et 21, caractérisé par les étapes de procédé consistant à :
détecter la position d'étranglement, mesurer la vitesse de moteur et déterminer si la position d'étranglement a été maintenue sensiblement identique pendant une période prédéterminée, commander le moteur d'après un jeu prédéterminé de paramètres correspondant à la position d'étranglement détectée dans le cas où la position d'étranglement détectée a été modifiée et n'a pas été maintenue sensiblement identique pendant la période prédéterminée, produire une vitesse de moteur souhaitée correspondant à la position d'étranglement détectée dans le cas où la position d'étranglement a été maintenue sensiblement identique pendant la période prédéterminée, et régler au moins un paramètre de fonctionnement de moteur pour réduire la différence entre les vitesses de moteur mesurée et souhaitée.

23. Procédé selon au moins l'une des revendications 20 à 22 précédentes, caractérisé en ce que, en plus de ladite synchronisation d'injection de carburant, la quantité de carburant étant injectée à un cylindre du moteur est commandée.

24. Procédé selon au moins l'une des revendications 20 à 23 précédentes, caractérisé en ce que le moment de l'injection de carburant est avancé lorsque la vitesse de moteur est inférieure à la vitesse de moteur souhaitée et est retardé lorsque la vitesse de moteur est supérieure à la vitesse de moteur souhaitée.

25. Procédé selon la revendication 24, caractérisé en ce que la quantité de carburant injectée au cylindre est augmentée lorsque la vitesse de moteur est inférieure à la vitesse de moteur souhaitée et est réduite lorsque la vitesse de moteur est supérieure à la vitesse de moteur souhaitée.

26. Procédé selon l'une des revendications 20 à 25, caractérisé en ce que la synchronisation d'allumage est avancée lorsque la vitesse de moteur est inférieure à la vitesse de moteur souhaitée et est retardée lorsque la vitesse de moteur est supérieure à la vitesse de moteur souhaitée.

27. Procédé selon au moins l'une des revendications 20 à 26 précédentes, caractérisé en ce que le paramètre de fonctionnement de moteur est ajusté d'après la différence entre les vitesses de moteur mesurée et souhaitée et selon si la quantité d'air d'admission se trouve ou non dans la plage d'excès d'air.

28. Procédé selon l'une des revendications 20 à 27, caractérisé par la détection d'une variation brutale de l'état desdits moyens de vitesse commandés par l'opérateur et le réglage du fonctionnement dudit injecteur de carburant en réponse à une variation brutale détectée de l'état desdits moyens de vitesse commandés par l'opérateur.

29. Procédé selon la revendication 28, caractérisé en ce que le fonctionnement de l'injecteur de carburant est modifié en réponse aux variations des plages de charge du moteur et fournit une stratégie de commande différence d'après la plage de charges de moteur détectée.

30. Procédé selon la revendication 28 ou 29, caractérisé en ce qu'une opération de réglage de l'injecteur de carburant est exécutée seulement lorsque les moteurs (15) fonctionnent dans certaines plages de charges.

31. Procédé selon au moins l'une des revendications 28 à 30, caractérisé en ce que le réglage de l'injecteur de carburant est effectué lorsque le moteur (15) est en phase d'accélération et se trouve dans la plage de charges élevées.

32. Procédé selon au moins l'une des revendications 28 à 31 précédentes, caractérisé en ce que le réglage de l'injecteur de carburant fournit une augmentation de carburant ou bien une avance du moment de l'injection de carburant lorsque le moteur (15) est en phase de décélération et se trouve dans la plage de faibles charges.

33. Procédé selon au moins l'une des revendications 28 à 32 précédentes, caractérisé en ce que le réglage de l'injecteur de carburant réduit la quantité de carburant injectée ou retarde le moment de l'injection de carburant lorsque le moteur (15) est en phase de décélération et ne se trouve pas dans la plage de faibles charges.

34. Procédé selon au moins l'une des revendications 28 à 33 précédentes, caractérisé en ce que le réglage de l'injecteur de carburant augmente la durée ou avance le moment de l'injection de carburant lorsque le moteur est en phase d'accélération.

35. Procédé selon au moins l'une des revendications 28 à 34 précédentes, caractérisé en ce que la durée d'injection de carburant est augmentée ou le moment est avancé seulement lorsque le moteur (15) ne se trouve pas dans la plage de charges élevées.
